(19) Europäisches Patentamt / European Patent Office / Office européen des brevets

(11) **EP 3 968 221 B1**

(12) **EUROPEAN PATENT SPECIFICATION**

(45) Date of publication and mention
of the grant of the patent:
**11.03.2026 Bulletin 2026/11**

(21) Application number: **19933809.6**

(22) Date of filing: **17.06.2019**

(51) International Patent Classification (IPC):
**G06V 10/44** $^{(2022.01)}$    **G06V 10/82** $^{(2022.01)}$
**G06N 3/0464** $^{(2023.01)}$    **G06N 3/09** $^{(2023.01)}$
**G06N 3/045** $^{(2023.01)}$

(52) Cooperative Patent Classification (CPC):
**G06V 10/82; G06N 3/045; G06N 3/0464;**
**G06N 3/09; G06V 10/457**

(86) International application number:
**PCT/CN2019/091480**

(87) International publication number:
**WO 2020/252615 (24.12.2020 Gazette 2020/52)**

(54) **VEHICLE ATTITUDE RECOGNITION METHOD AND RELATED DEVICE**

VERFAHREN ZUR ERKENNUNG DER LAGE EINES FAHRZEUGS UND ENTSPRECHENDE VORRICHTUNG

PROCÉDÉ DE RECONNAISSANCE D'ATTITUDE DE VÉHICULE ET DISPOSITIF ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**16.03.2022 Bulletin 2022/11**

(73) Proprietor: **Shenzhen Yinwang Intelligent Technologies Co., Ltd.**
**Shenzhen City, Guangdong 518129 (CN)**

(72) Inventors:
• **ZHENG, Kai**
**Shenzhen, Guangdong 518129 (CN)**
• **LI, Meng**
**Shenzhen, Guangdong 518129 (CN)**
• **XIONG, Jinxin**
**Shenzhen, Guangdong 518129 (CN)**

(74) Representative: **Gill Jennings & Every LLP**
**The Broadgate Tower**
**20 Primrose Street**
**London EC2A 2ES (GB)**

(56) References cited:
WO-A1-2019/022948    CN-A- 105 466 438
CN-A- 109 466 548    CN-A- 109 657 596
CN-A- 109 747 638

• XUE YAO ET AL: "Vehicle detection and pose estimation by probabilistic representation", 2017 IEEE INTERNATIONAL CONFERENCE ON IMAGE PROCESSING (ICIP), 17 September 2017 (2017-09-17), IEEE, Piscataway, NJ, USA, pages 3355 - 3359, XP033323197, DOI: 10.1109/ICIP.2017.8296904
• AZAM SHOAIB ET AL: "Vehicle pose detection using region based convolutional neural network", 2016 INTERNATIONAL CONFERENCE ON CONTROL, AUTOMATION AND INFORMATION SCIENCES (ICCAIS), 27 October 2016 (2016-10-27), IEEE, Piscataway, NJ, USA, pages 194 - 198, XP033046144, DOI: 10.1109/ICCAIS.2016.7822459
• WANG CHAO ET AL: "Probabilistic Inference for Occluded and Multiview On-road Vehicle Detection", IEEE TRANSACTIONS ON INTELLIGENT TRANSPORTATION SYSTEMS,, vol. 17, no. 1, 1 January 2016 (2016-01-01), IEEE, PISCATAWAY, NJ, USA, pages 215 - 229, XP011595334, ISSN: 1524-9050, [retrieved on 20151223], DOI: 10.1109/TITS.2015.2466109

## Description

### TECHNICAL FIELD

This application relates to the field of autonomous driving technologies, and in particular, to a vehicle posture recognition method and a related device.

### BACKGROUND

The autonomous driving technology has developed rapidly in recent years and has become a hot direction in the whole industry. The autonomous driving technology mainly includes environment perception, path planning, and motion control. Environment perception is a very important constituent part in the autonomous driving technology, and posture information of a vehicle in a surrounding environment may be recognized by using environment perception. Because the posture information of the vehicle is often related to a subsequent travel behavior of the vehicle, the posture information of the vehicle may be used as a basis for path planning. Therefore, the vehicle is controlled to travel according to a planned path, and safety of autonomous driving is ensured.

Currently, the PointNet processes point cloud data to obtain a probability matrix by using a multilayer perceptron (multilayer perceptron, MLP), so as to perform accurate clustering on the point cloud data, for example, distinguish which feature points belong to a vehicle and which feature points belong to a pedestrian. Therefore, a vehicle posture is recognized based on a more accurate clustering result.

However, in this method, accurate clustering is performed on the point cloud data based on global features of the vehicle, and the speed at which the entire model achieves accurate clustering is slow, which leads to a long waiting time in the process of recognizing the posture information of the vehicle, and it is difficult to meet the real-time requirement in the autonomous driving field. XUE YAO ET AL: "Vehicle detection and pose estimation by probabilistic representation", IEEE INTERNATIONAL CONFERENCE ON IMAGE PROCESSING (ICIP) 17 September 2017 (2017-09-17), pages 3355-3359, IEEE, Piscataway, NJ, USA DOI: 10.1109/ICIP.2017.8296904], discusses a supervised learning framework with Fully Convolutional Network (FCN) to build probabilistic prediction maps of vehicle components, then vehicle pose is estimated based on the absence/presence and the spatial relationship ( e.g. the relative distance, scales, angles) of these components. The proposed method is evaluated with three state-of-the-art approaches on public vehicle image datasets.

### SUMMARY

Embodiments of this application provide a vehicle posture recognition method and a related device, so as to more quickly recognize a posture of a target vehicle, and easily meet the real-time requirement in the autonomous driving field.

To resolve the foregoing technique problem, the embodiments of this application provide the following technical solutions. The invention is set out as in the appended claims.

A first aspect of the embodiments of this application provides a vehicle posture recognition method. A feature map is obtained from point cloud data. The feature map represents probabilities that each feature point is located on different components of the target vehicle. A plurality of components of the target vehicle included in the feature map are determined based on a plurality of feature points in the feature map. In addition, a position relationship between components on a vehicle plane of the target vehicle is fixed. The vehicle plane of the target vehicle is determined based on the position relationship between the plurality of components, and the posture of the target vehicle is further recognized based on the determined vehicle plane. The process of obtaining the vehicle plane includes a plurality of iterations. In each iteration, i.e., in an $i^{th}$ iteration, a component recognition result of a target feature point is determined based on probabilities that the target feature point is located on different components in an $(i-1)^{th}$ iteration, where the component recognition result reflects a component on which the target feature point is located. In this way, a plurality of components is determined based on component recognition results of the plurality of feature points. Then, a vehicle plane recognition result of the target feature point is determined based on a position relationship between the plurality of the components by comparing the position relationship with a plurality of preset position relationships, wherein each preset position relationship corresponds to one vehicle plane.

The component recognition result has a first result confidence and the vehicle plane recognition result has a second result confidence. In this way, probabilities that the target feature point is located on different components in the $i^{th}$ iteration are obtained by updating, with a higher confidence, the probabilities based on a magnitude relationship between the first result confidence and the second result confidence. It is ensured that the probabilities corresponding to the $(i-1)^{th}$ iteration are adjusted to a direction having a higher confidence, so as to obtain more accurate and credible probabilities. Because local features of the components are considered in the method, and there is an association relationship between the local features of the components and the vehicle plane, that is, a relative position relationship of the components on the vehicle plane is fixed, a credible vehicle plane recognition result can be obtained more quickly by combining the component recognition result and the vehicle plane recognition result. Therefore, the posture of the target vehicle can be recognized more quickly, and the real-time requirement in the autonomous driving field can be easily met.

The determining a component recognition result of the target feature point based on probabilities that the target feature point is located on different components in an (i-1)$^{th}$ iteration is mainly described. In some cases, there may be a target feature point having probabilities of being located on a plurality of different components greater than a preset probability threshold, and the target feature point should actually be located on one component. Therefore, to determine a component on which the target feature point is most likely located, a component corresponding to a highest probability is determined as the component on which the target feature point is located.

In a first implementation of the first aspect of the embodiments of this application, it should be understood that, to improve accuracy of the recognition result, the probabilities that the target feature point is located on different components in the i$^{th}$ iteration should be more accurate than the probabilities that the target feature point is located on different components in the (i-1)$^{th}$ iteration. Therefore, a more accurate component recognition result can be obtained based on a more accurate probability. Therefore, the probabilities that the target feature point is located on different components in the i$^{th}$ iteration should be obtained by updating based on a recognition result having a higher result confidence.

As an example, when the first result confidence is higher than the second result confidence, an implementation of obtaining, by updating with a higher confidence based on a magnitude relationship between the first result confidence and the second result confidence, probabilities that the target feature point is located on different components in an i$^{th}$ iteration may be increasing, by a preset first change amount, a probability that the target feature point is located on a target component, and/or decreasing, by a preset second change amount, a probability that the target feature point is located on a non-target component, where the target component is a component indicated by the component recognition result.

In a second implementation of the first aspect of the embodiments of this application, when the first result confidence is lower than the second result confidence, an implementation of obtaining, by updating with a higher confidence based on a magnitude relationship between the first result confidence and the second result confidence, probabilities that the target feature point is located on different components in an i$^{th}$ iteration may be increasing, by a preset third change amount, a probability that the target feature point is located on at least one component on a target vehicle plane, and/or decreasing, by a preset fourth change amount, a probability that the target feature point is located on at least one component on a non-target vehicle plane, where the target vehicle plane is a vehicle plane indicated by the vehicle plane recognition result.

In a third implementation of the first aspect of the embodiments of this application, because a position relationship between components on each vehicle plane of the target vehicle is fixed, the position relationship between the components on each vehicle plane, that is, a preset position relationship, may be prestored, and each preset position relationship corresponds to one vehicle plane. After the to-be-determined components are determined based on the component recognition result, the position relationship between the plurality of to-be-determined components is compared with a plurality of preset position relationships, and a smaller difference indicates that the to-be-determined components are more likely located on the vehicle plane corresponding to the preset position relationship. Therefore, a vehicle plane corresponding to a preset position relationship with a smallest difference is determined as a vehicle plane on which the target feature point is located.

In a fourth implementation of the first aspect of the embodiments of this application, to accurately recognize the vehicle plane of the target vehicle, a vehicle plane recognition result obtained when the iteration stops should be accurate and credible. Therefore, an iteration stopping condition also affects the accuracy of the vehicle plane recognition result.

As an example, in the i$^{th}$ iteration, the iteration stopping condition may be determined based on a first cost. The first cost may reflect a degree of difference between the second result confidence and a second preset confidence. A smaller degree of difference between the second result confidence and the second preset confidence indicates higher accuracy of the vehicle plane recognition result. When the degree of difference between the second result confidence and the second preset confidence is small enough, for example, when the first cost is less than a first threshold, the plurality of iterations are ended.

The feature map is a multilayer feature map, each layer of feature map corresponds to one component in the target vehicle, and the first cost is obtained based on the following formula:

$$f_L^i = \sum_{c=1}^{C} \sum_{P} W1(P) \cdot ||L_c^i(P) - L_c^*(P)||_2^2$$

where $f_L^i$ denotes the first cost of the i$^{th}$ iteration, $||L_c^i(P) - L_c^*(P)||_2^2$ denotes a square of a Euclidean norm for

$L_c^i(P) - L_c^*(P)$, $L_c^i(P)$ is a second result confidence corresponding to a feature point P in a c$^{th}$ layer of feature map, and

$L_c^*(P)$ is a second preset confidence corresponding to the feature point P in the c$^{th}$ layer of feature map, where the c$^{th}$ layer of feature map includes feature points located on a same component; and **W1(P)** represents a weight of the second result confidence of the feature point P.

In a fifth implementation of the first aspect of the embodiments of this application, it should be understood that, not only the vehicle plane recognition result but also the component recognition result are obtained in the iteration process. Therefore, to further improve the accuracy of the component recognition result and further improve the accuracy of posture recognition of the target vehicle, both the first cost of the vehicle plane recognition result and a third cost of the component recognition result need to be considered in the iteration ending condition, so as to determine the iteration ending condition based on a comprehensive cost, for example, a second cost.

As an example, in the $i^{th}$ iteration, the iteration ending condition may be determined based on the second cost. For example, when the second cost is less than a second threshold, a plurality of iterations are ended.

The second cost is obtained based on the following formula:

$$f = \sum_{i=1}^{I} (f_S^i + f_L^i)$$

where f is the second cost of the $i^{th}$ iteration, $f_L^i$ is the first cost, $f_S^i$ is a third cost of the $i^{th}$ iteration, I is a quantity of iterations, and the third cost is obtained based on the following formula:

$$f_S^i = \sum_{c=1}^{J} \sum_{P} W2(P) \cdot ||L_c^i(P) - L_c^*(P)||_2^2$$

where $f_S^i$ denotes the third cost of the $i^{th}$ iteration, $||L_c^i(P) - L_c^*(P)||_2^2$ denotes the square of the Euclidean norm for $L_c^i(P) - L_c^*(P)$, $L_c^i(P)$ is a first result confidence corresponding to the feature point P in the $c^{th}$ layer of feature map, and $L_c^*(P)$ is a first preset confidence corresponding to the feature point P in the $c^{th}$ layer of feature map; and **W2 (P)** denotes a weight of the first result confidence of the feature point P.

In a sixth implementation of the first aspect of the embodiments of this application, **W1(P)** or **W2 (P)** corresponding to a feature point whose probability of being located on a component of the target vehicle in the feature map is not reflected is set to 0, to avoid impact of the feature point whose probability of being located on a component of the target vehicle in the feature map is not reflected on a calculation loss function.

A second aspect of the embodiments of this application provides a vehicle posture recognition apparatus. The apparatus includes a first determining unit, a second determining unit, and a recognition unit.

The first determining unit is configured to determine, based on a plurality of feature points in a feature map obtained from a data point cloud, a plurality of components of a target vehicle included in the feature map, where the feature map is used to represent probabilities that each feature point is located on different components of the target vehicle.

The second determining unit is configured to determine a vehicle plane of the target vehicle based on a position relationship between the plurality of components.

The recognition unit is configured to recognize a posture of the target vehicle based on the vehicle plane.

The plurality of feature points include a target feature point, the vehicle plane is determined through a plurality of iterations, and in an $i^{th}$ iteration in the plurality of iterations, the first determining unit is configured to:

determine a component recognition result of the target feature point based on probabilities that the target feature point is located on different components in an $(i-1)^{th}$ iteration, where the component recognition result has a first result confidence; and
in this way determine a plurality of components based on component recognition results of the plurality of feature points
determine a component corresponding to a highest probability as a component on which the target feature point is located.

The second determining unit is configured to:

determine a vehicle plane recognition result of the target feature point based on a position relationship between the plurality of components by comparing the position relationship with a plurality of preset position relationships, wherein each preset position relationship corresponds to one vehicle plane, where the vehicle plane recognition result has a second result confidence; and

obtain, by updating with a higher confidence based on a magnitude relationship between the first result confidence and the second result confidence, probabilities that the target feature point is located on different components in the $i^{th}$ iteration.

In a first implementation of the second aspect of the embodiments of this application, when the first result confidence is higher than the second result confidence, the second determining unit is configured to:

increase, by a preset first change amount, a probability that the target feature point is located on a target component, and/or decrease, by a preset second change amount, a probability that the target feature point is located on a non-target component, where the target component is a component indicated by the component recognition result.

In a second implementation of the second aspect of the embodiments of this application, when the first result confidence is lower than the second result confidence, the second determining unit is configured to:

increase, by a preset third change amount, a probability that the target feature point is located on at least one component on a target vehicle plane, and/or decrease, by a preset fourth change amount, a probability that the target feature point is located on at least one component on a non-target vehicle plane, where the target vehicle plane is a vehicle plane indicated by the vehicle plane recognition result.

In a third implementation of the second aspect of the embodiments of this application, the second determining unit is configured to:

compare the position relationship between the plurality of to-be-determined components with a plurality of preset position relationships, where each preset position relationship corresponds to one vehicle plane; and

determine a vehicle plane corresponding to a preset position relationship with a smallest difference as a vehicle plane on which the target feature point is located.

In a fourth implementation of the second aspect of the embodiments of this application, in an $i^{th}$ iteration, the apparatus further includes a judging unit.

When the judging unit determines that a first cost is less than a first threshold, the plurality of iterations are ended.

The feature map is a multilayer feature map, each layer of feature map corresponds to one component in the target vehicle, and the first cost is obtained based on the following formula:

$$f_L^i = \sum_{c=1}^{C} \sum_{P} W1(P) \cdot ||L_c^i(P) - L_c^*(P)||_2^2$$

where $f_L^i$ denotes the first cost of the $i^{th}$ iteration, $||L_c^i(P) - L_c^*(P)||_2^2$ denotes a square of a Euclidean norm for $L_c^i(P) - L_c^*(P)$, $L_c^i(P)$ is a second result confidence corresponding to a feature point P in a $c^{th}$ layer of feature map, and $L_c^*(P)$ is a second preset confidence corresponding to the feature point P in the $c^{th}$ layer of feature map, where the $c^{th}$ layer of feature map includes feature points located on a same component; and **W1(P)** represents a weight of the second result confidence of the feature point P.

In a fifth implementation of the second aspect of the embodiments of this application, in an $i^{th}$ iteration, the judging unit is further configured to:

when the judging unit determines that a second cost is less than a second threshold, end the plurality of iterations.

The second cost is obtained based on the following formula:

$$f = \sum_{i=1}^{I} (f_S^i + f_L^i)$$

where f is the second cost of the $i^{th}$ iteration, $f_L^i$ is the first cost, $f_S^i$ is a third cost of the $i^{th}$ iteration, I is a quantity of iterations, and the third cost is obtained based on the following formula:

$$f_S^i = \sum_{c=1}^{J} \sum_{P} W2(P) \cdot ||L_c^i(P) - L_c^*(P)||_2^2$$

where $f_S^i$ denotes the third cost of the i$^{th}$ iteration, $||L_c^i(P) - L_c^*(P)||_2^2$ denotes the square of the Euclidean norm for $L_c^i(P) - L_c^*(P)$, $L_c^i(P)$ is a first result confidence corresponding to the feature point P in the c$^{th}$ layer of feature map, and $L_c^*(P)$ is a first preset confidence corresponding to the feature point P in the c$^{th}$ layer of feature map; and **W2 (P)** denotes a weight of the first result confidence of the feature point P.

In a sixth implementation of the second aspect of the embodiments of this application, **W1(P)** or **W2 (P)** corresponding to a feature point whose probability of being located on a component of the target vehicle in the feature map is not reflected is set to 0.

A third aspect of the embodiments of this application provides a computer-readable storage medium. The computer-readable storage medium is configured to store program code, and the program code is used to perform the vehicle posture recognition method according to any one of the first aspect.

**BRIEF DESCRIPTION OF DRAWINGS**

FIG. 1 is an architectural diagram of a scenario of a vehicle posture recognition method according to an embodiment of this application;

FIG. 2 is a flowchart of a vehicle posture recognition method according to an embodiment of this application;

FIG. 3 is an example diagram of a component segmentation result of a vehicle head plane according to an embodiment of this application;

FIG. 4 is an example diagram of a component segmentation result of a vehicle side plane according to an embodiment of this application;

FIG. 5 is an example diagram of a component segmentation result of a vehicle rear plane according to an embodiment of this application;

FIG. 6 is an example diagram of a component segmentation result of a vehicle roof plane according to an embodiment of this application;

FIG. 7 is an example diagram of forming a posture BOX of a target vehicle based on a vehicle plane according to an embodiment of this application;

FIG. 8 is an example diagram of a network for recognizing a vehicle plane according to an embodiment of this application;

FIG. 9 is a structural diagram of a vehicle posture recognition apparatus according to an embodiment of this application; and

FIG. 10 is a structural diagram of a device for vehicle posture recognition according to an embodiment of this application.

**DESCRIPTION OF EMBODIMENTS**

To make a person skilled in the art understand the technical solutions in this application better, the following describes the technical solutions in the embodiments of this application with reference to the accompanying drawings in the embodiments of this application.

In the specification, claims, and accompanying drawings of this application, the terms "first", "second", "third", "fourth", and the like (if existent) are intended to distinguish between similar objects but do not necessarily indicate a specific order or sequence. It should be understood that the data termed in such a way are interchangeable in proper circumstances, so that the embodiments of this application described herein can be implemented in orders except the order illustrated or described herein. Moreover, the terms "include", "have" and any other variants mean to cover the non-exclusive inclusion, for example, a process, method, system, product, or device that includes a list of steps or units is not necessarily limited to those units, but may include other units not expressly listed or inherent to such a process, method, system, product, or device.

The PointNet performs accurate clustering on point cloud data by using a multilayer perceptron (multilayer perceptron, MLP), so that a vehicle posture is recognized based on a more accurate clustering result. However, in a process of performing accurate clustering on the point cloud data by using this method, because it is necessary to recognize which points belong to a vehicle and which points do not belong to the vehicle, that is, global features of the vehicle need to be considered when clustering is performed on each point, more features are considered, a calculation amount is large, and a speed of achieving accurate clustering is relatively slow, which leads to a long waiting time in the process of recognizing the posture information of the vehicle, and it is difficult to meet the real-time requirement in the autonomous driving field.

Therefore, an embodiment of this application provides a vehicle posture recognition method. The method may be applied to a data processing device. The data processing device may be a terminal device. The terminal device may upload obtained point cloud data to a server. The server determines a vehicle posture by using the posture recognition method provided in this embodiment of this application, so as to be used for path planning or the like. The server may be an independent server, or may be a server in a cluster.

If vehicle posture recognition is applied to the terminal device, the terminal device determines the vehicle posture by using the vehicle posture recognition method provided in this embodiment of this application, so as to be used for path planning or the like. The terminal device may be, for example, an intelligent terminal, a computer, a personal digital assistant (personal digital assistant, PDA), or a tablet computer.

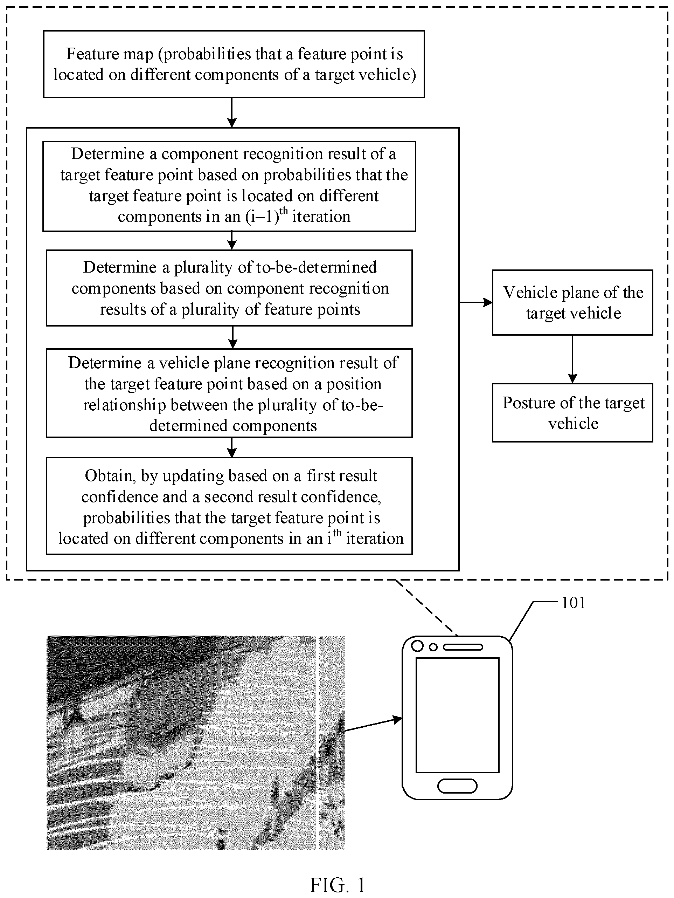

To make the technical solutions of this application clearer and easier to understand, the vehicle posture recognition method provided in this application is first described with reference to a specific scenario. Referring to an architectural diagram of a scenario of a vehicle posture recognition method in FIG. 1, a terminal device 101 is included in the scenario. The terminal device 101 determines, based on a plurality of feature points in a feature map, a plurality of components of a target vehicle included in the feature map, and recognizes a vehicle plane of the target vehicle based on a position relationship between the components, so as to recognize a posture of the target vehicle based on the vehicle plane.

The feature map may be obtained by the terminal device 101 based on obtained point cloud data. The feature map is used to reflect probabilities that a feature point is located on different components of the target vehicle. Therefore, a plurality of components of the target vehicle included in the feature map is determined. In addition, a position relationship between components on a vehicle plane of the target vehicle is fixed. Therefore, the vehicle plane of the target vehicle is obtained based on the position relationship between the components, and the posture of the target vehicle is further recognized based on the determined vehicle plane.

The process of obtaining the vehicle plane includes a plurality of iterations. A probability reflected in the feature map obtained by the terminal device 101 based on the obtained point cloud data may be merely preliminarily calculated, and cannot be used as a basis for finally determining the vehicle plane of the target vehicle. To accurately determine the vehicle plane of the target vehicle, in an $i^{th}$ iteration, the terminal device 101 determines a component recognition result of a target feature point based on probabilities that the target feature point is located on different components in an $(i-1)^{th}$ iteration. A plurality of to-be-determined components are determined based on component recognition results of a plurality of feature points, so as to determine the vehicle plane recognition result of the target feature point based on a position relationship between the plurality of to-be-determined components. The component recognition result of the target feature point indicates a component on which the target feature point is located, and the vehicle plane recognition result indicates a vehicle plane on which the target feature point is located. The component recognition result has a first result confidence and the vehicle plane recognition result has a second result confidence. In this way, probabilities that the target feature point is located on different components in the $i^{th}$ iteration are obtained by updating based on the first result confidence and the second result confidence. It is ensured that a feature map corresponding to the $(i-1)^{th}$ iteration is adjusted to a direction having a higher confidence, so as to obtain a more accurate and credible feature map.

Therefore, the terminal device 101 may accurately determine, based on the more accurate probability updated, the plurality of components of the target vehicle included in the feature map, to further accurately recognize the vehicle plane of the target vehicle, so as to more accurately recognize the posture of the target vehicle.

It should be noted that FIG. 1 is described by using the terminal device 101 as an example, and constitutes no limitation on this application.

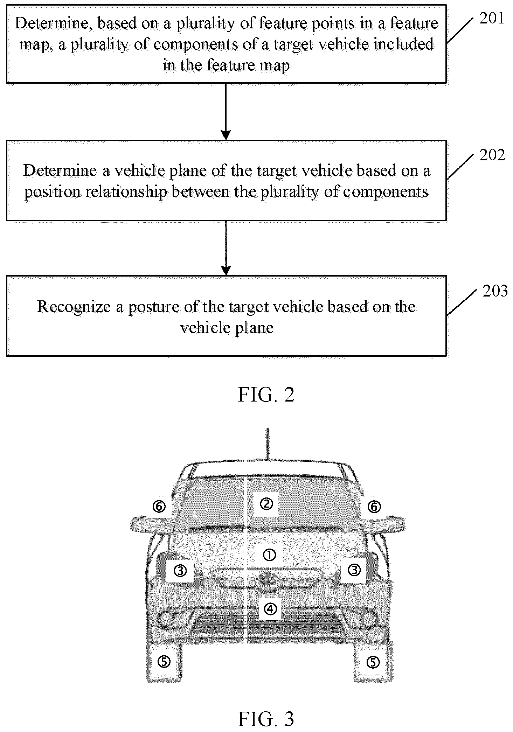

Next, the vehicle posture recognition method provided in this application is described in detail from a perspective of a terminal device. Referring to a flowchart of a vehicle posture recognition method shown in FIG. 2, the method includes:

S201. Determine, based on a plurality of feature points in a feature map, a plurality of components of a target vehicle included in the feature map.

When a posture of the target vehicle needs to be recognized, the target vehicle may be scanned by radar, for example, laser radar, to acquire three-dimensional point cloud data of the target vehicle. The point cloud data may include position information and intensity information of the feature points. The three-dimensional point cloud data may be, for example, laser point cloud data of D*W*H, where D denotes a depth (depth) of the point cloud data, W denotes a width (width) of the point cloud data, and H denotes a height (height) of the point cloud data.

Different from a conventional method for processing point cloud data, which adopts a top-down recognition method, that is, point cloud data is clustered based on global features of a target vehicle to recognize feature points belonging to the target vehicle, the target vehicle is determined, and then segmentation is performed on the target vehicle to determine a vehicle plane, so as to recognize a posture of the target vehicle, this embodiment of this application adopts a bottom-up recognition method, that is, first components on a target vehicle are recognized, and then a vehicle plane of the target vehicle is determined based on a position relationship between the components, so as to recognize a posture of the target vehicle based on the vehicle plane.

To recognize a component on which a feature point in the point cloud data is located, the target vehicle may be segmented in advance to obtain a component included on each vehicle plane. It may be understood that a vehicle plane that needs to be recognized generally includes at least one vehicle plane among a vehicle head plane, vehicle side planes (two symmetrical vehicle side planes), a vehicle rear plane, and a vehicle roof plane, and components obtained after division is performed on each vehicle plane are shown in FIG. 3 to FIG. 6, respectively.

Component segmentation is performed on the vehicle head plane, and a result of the segmentation is shown in FIG. 3. Components included in the vehicle head plane are: ①. hood of the vehicle; ②. front windshield of the vehicle; ③. vehicle lamp; ④. lower hood of the vehicle; ⑤. tire; and ⑥. A and B pillars and reflector of the vehicle.

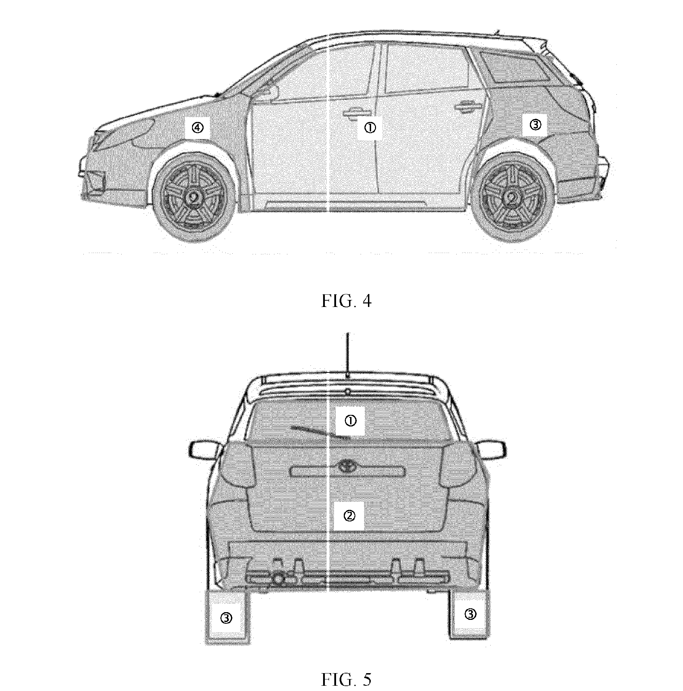

Component segmentation is performed on the vehicle side plane, and a result of the segmentation is shown in FIG. 4. Components included in the vehicle side plane are: ①. side door; ②. tire; ③. rear portion of the vehicle body; and ④. front portion of the vehicle body.

Component segmentation is performed on the vehicle rear plane, and a result of the segmentation is shown in FIG. 5. Components included in the vehicle rear plane are: ① rear windshield; ②. trunk; and ③. tire.

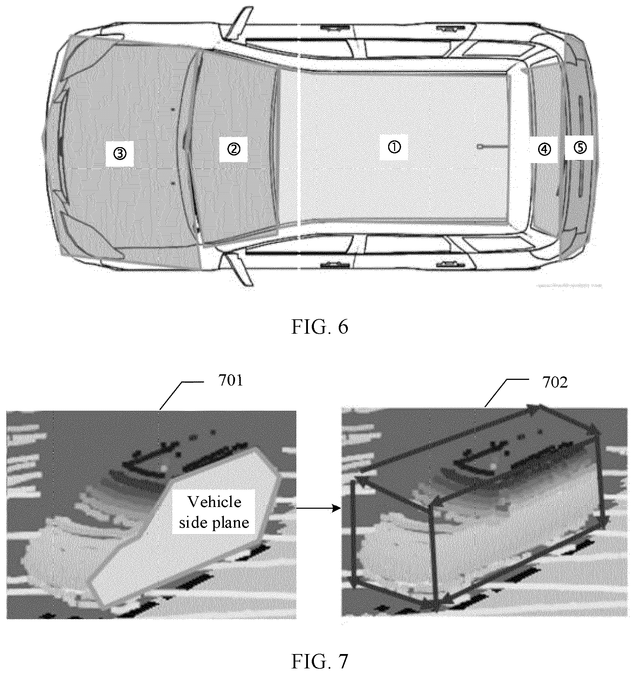

Component segmentation is performed on the vehicle roof plane, and a result of the segmentation is shown in FIG. 6. Components included in the vehicle roof plane are: ①. roof of the vehicle; ②. front windshield of the vehicle; ③. vehicle head; ④. rear windshield of the vehicle; and ⑤. vehicle rear.

Each component has its own local features, and the local features of the component include, for example, a morphological feature and a light-passing characteristic. The morphological feature may include a shape of the component, and morphological features of different components may be different, so that shapes formed by feature points included in the point cloud obtained by scanning are different. Therefore, a component may be recognized with reference to the morphological feature of the component. For example, if the component is a tire, a morphological feature of the tire is circular. Materials of different components may have different light-passing characteristics, and therefore the light-passing characteristics of different components may be different, so that intensity information of feature points included in the point cloud obtained by scanning is different. Therefore, a component may be recognized with reference to the light-passing characteristic of the component.

A feature map (feature map) may be obtained from the three-dimensional point cloud data of the target vehicle by using a three-dimensional voxel network (VoxelNet). The feature map reflects probabilities that a feature point is located on different components. The feature map may be a multilayer feature map, each layer of the feature map corresponds to one component, and each layer of the feature map reflects a probability that a feature point is located on a component corresponding to the layer of the feature map. For example, for the components on the target vehicle including the tire, the front windshield of the vehicle, and the vehicle lamp, feature points may be clustered by using the VoxelNet, and probabilities that the feature points are respectively located on the tire, the front windshield of the vehicle, and the vehicle lamp are determined, so as to generate a three-layer feature map. One layer of the feature map reflects probabilities that the feature points are located on the tire, one layer of the feature map reflects probabilities that the feature points are located on the front windshield of the vehicle, and the rest layer of the feature map reflects probabilities that the feature points are located on the vehicle lamp.

The VoxelNet is an end-to-end point cloud target detection network. After a large amount of learning, local features of components may be learned, and therefore probabilities that a feature point in the three-dimensional point cloud data is located on a plurality of components on the target vehicle are detected based on the local features. The probabilities that the feature point is located on the plurality of components of the target vehicle reflect possibilities that the feature point is located on different components, and a higher probability that the feature point is located on a component indicates a higher possibility that the feature point is located on the component. When the probability that the feature point is located on the component is high enough, the feature point may be considered to belong to the component. In this way, the component may be detected from the three-dimensional point cloud data.

Next, how to determine a component recognition result of a target feature point in an $i^{th}$ iteration based on probabilities that the target feature point is located on different components in an $(i-1)^{th}$ iteration is described.

In a possible implementation, to determine the component on which the target feature point is located, the probabilities that the target feature point is located on different components may be compared with a preset probability threshold, so as to determine a component recognition result of the target feature point based on magnitude relationships between the probabilities and the preset probability threshold. If a probability that the target feature point is located on a component is greater than or equal to the preset probability threshold, it is considered that the target feature point is located on the component; otherwise, the target feature point is not located on the component. In this embodiment, the component recognition result may be determined by using a convolutional neural network.

For example, the plurality of components include a first component and a second component. If a probability that the target feature point is located on the first component is greater than the preset probability threshold, it is determined that the target feature point is located on the first component. If a probability that the target feature point is located on the second component is less than the preset probability threshold, it is determined that the target feature point is not located on the second component.

In some cases, there may be a target feature point having probabilities of being located on a plurality of different components greater than the preset probability threshold, and the target feature point should actually be located on one component. Therefore, to determine a component on which the target feature point is most likely located, according to the invention, a component corresponding to a highest probability is determined as the component on which the target feature point is located.

S202. Determine a vehicle plane of the target vehicle based on a position relationship between the plurality of components.

Because the position relationship between the components on the vehicle plane of the target vehicle is fixed (the position relationship between the components may be reflected by a position relationship between feature points belonging to centers of mass of the components), the vehicle plane of the target vehicle can be recognized based on the position relationship between the plurality of components.

It should be noted that, the plurality of feature points include a target feature point, and the vehicle plane needs to be determined through a plurality of iterations. In the first iteration, a used feature map is obtained through preliminary prediction by using the VoxelNet, and probabilities that the target feature point in the feature map is located on different components are not accurate enough. Probabilities that the target feature point is located on different components in a subsequent iteration may be obtained by updating probabilities in a previous iteration, so that the probabilities that target feature point is located on different components in the current iteration are more accurate than the probabilities that the target feature point is located on different components in the previous iteration.

Specifically, a process of the $i^{th}$ iteration is as follows: A component recognition result of the target feature point is determined based on probabilities that the target feature point is located on different components in the $(i-1)^{th}$ iteration. The component recognition result reflects the component on which the target feature point is located, so that a plurality of to-be-determined components are determined based on component recognition results of the plurality of feature points. A vehicle plane recognition result of the target feature point is determined based on a position relationship between the plurality of to-be-determined components. The component recognition result has a first result confidence and the vehicle plane recognition result has a second result confidence. The first result confidence is used to reflect a degree of reliability of the component recognition result, and the second result confidence is used to reflect a degree of reliability of the vehicle plane recognition result. Probabilities that the target feature point is located on different components in the $i^{th}$ iteration are obtained by updating based on the first result confidence and the second result confidence.

It should be noted that a component recognition result of each feature point in the feature map has a first result confidence, and a first result confidence of the plurality of feature points may be expressed as:

$$S^i = \rho^i(F, S^{i-1}, L^{i-1}), \forall i \geq 2 \qquad (1)$$

where $S^i$ denotes the first result confidence of the plurality of feature points of the $i^{th}$ iteration, $\rho^i()$ denotes a function for predicting the first result confidence, F denotes a feature map and may be expressed by using a four-dimensional matrix, where dimensions in the four-dimensional matrix respectively correspond to D, W, and H of a feature point included in the feature map and a probability that the feature point is located on a component corresponding to each layer of the feature map, $S^{i-1}$ denotes the first result confidence of the plurality of feature points of the $(i-1)^{th}$ iteration, $L^{i-1}$ denotes a second result confidence of the plurality of feature points of the $(i-1)^{th}$ iteration, and $\forall i \geq 2$ denotes that any i is greater than or equal to 2.

Correspondingly, the vehicle plane recognition result of each feature point in the feature map has a second result confidence, and a second result confidence of the plurality of feature points may be expressed as:

$$L^i = \varphi^i(F, S^{i-1}, L^{i-1}), \forall i \geq 2 \qquad (2)$$

where $L^i$ denotes the second result confidence of the plurality of feature points of the $i^{th}$ iteration, $\varphi^i()$ denotes a function for predicting the second result confidence, F denotes a feature map and may be expressed by using a four-dimensional matrix, where dimensions in the four-dimensional matrix respectively correspond to D, W, and H of a feature point included in the feature map and a probability that the feature point is located on a component corresponding to each layer of the feature map, $S^{i-1}$ denotes the first result confidence of the plurality of feature points of the $(i-1)^{th}$ iteration, $L^{i-1}$ denotes a second result confidence of the plurality of feature points of the $(i-1)^{th}$ iteration, and $\forall i \geq 2$ denotes that any i is greater than or equal to 2.

Next, how to determine the vehicle plane recognition result of the target feature point based on the position relationship between the plurality of to-be-determined components in the $i^{th}$ iteration is described.

In a possible implementation, because a position relationship between components on each vehicle plane of the vehicle is fixed, the position relationship between the components on each vehicle plane, that is, a preset position relationship, may be prestored, and each preset position relationship corresponds to one vehicle plane. The position relationship between the plurality of to-be-determined components is compared with a plurality of preset position relationships. A smaller difference indicates that the position relationship between the to-be-determined components is more similar to the preset position relationship, and the to-be-determined components are more likely located on a vehicle plane corresponding to the preset position relationship, that is, a target feature point located on the to-be-determined component is more likely located on the vehicle plane. Therefore, a vehicle plane corresponding to a preset position relationship with a smallest difference is determined as a vehicle plane on which the target feature point is located.

For example, for a vehicle side plane, a position relationship between a side door, two tires, a rear portion of the vehicle body, and a front portion of the vehicle body is fixed, and the position relationship between the components on the vehicle side plane, that is, a preset position relationship, may be prestored. Correspondingly, other vehicle planes, such as the vehicle front plane, the vehicle rear plane, and the vehicle roof plane, each correspond to one preset position relationship. If the to-be-determined components on which the feature points in the feature map are located include the side door, the two tires, the rear portion of the vehicle body, and the front portion of the vehicle body, the position relationship between the to-be-determined components may be compared with a plurality of preset position relationships, to obtain a difference between the position relationship between the to-be-determined components and each of the plurality of preset position relationships. If a difference between the position relationship between the to-be-determined components and the preset position relationship corresponding to the vehicle side plane is the smallest, it is determined that the target feature point is located on the vehicle side plane.

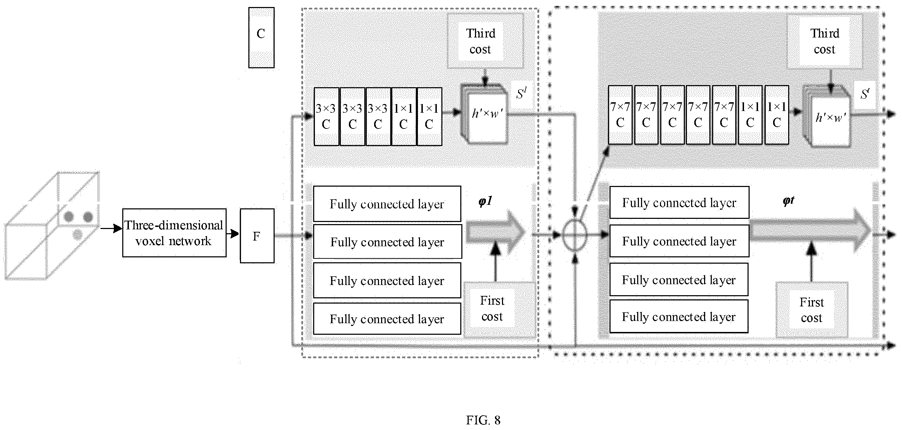

It should be noted that, in this embodiment, the vehicle plane recognition result may be determined by using a fully connected layer. In a process of recognizing a vehicle plane, vehicle planes of the target vehicle may be recognized in parallel. By an example in which the vehicle plane recognition result is determined by using a fully connected layer, if vehicle planes that may need to be recognized include four vehicle planes, namely, a vehicle head plane, a vehicle side plane, a vehicle rear plane, and a vehicle roof plane, four fully connected layers may be connected in parallel, and each fully connected layer is used to recognize one vehicle plane. Referring to FIG. 8, C represents a convolutional neural network, used to determine a component recognition result, a fully connected layer is used to determine a vehicle plane recognition result, and each dashed line box denotes one iteration.

Generally, a component may be represented by the center of mass of the component, and therefore, a position relationship between different components may be represented by a position relationship between the centers of mass of the components. In this way, when the vehicle plane recognition result is determined, a position relationship between feature points that are used as centers of mass may be compared with the preset position relationships, and a vehicle plane corresponding to a preset position relationship with a smallest difference is determined as the vehicle plane on which the target feature point is located.

S203. Recognize a posture of the target vehicle based on the vehicle plane.

After vehicle planes are determined, the vehicle planes may be combined to form a posture BOX of the target vehicle, to recognize the posture of the target vehicle based on the posture BOX.

Referring to FIG. 7, if it is assumed that the components recognized from the feature map include a side door and tire, the rear portion of the vehicle body, and the front portion of the vehicle body, based on a position relationship between the components, it may be determined that the side door and tire, the rear portion of the vehicle body, and the front portion of the vehicle body are located on the vehicle side plane, for example, as shown in 701. Correspondingly, the vehicle head plane and the vehicle roof plane may be further determined, that is, the vehicle planes determined by performing S203 include the vehicle side plane, the vehicle head plane, and the vehicle roof plane. The vehicle side plane, the vehicle head plane, and the vehicle roof plane are combined to form a posture BOX of the target vehicle, for example, the part formed by the arrowed solid lines in 702, to recognize the posture of the target vehicle based on the posture BOX.

When the posture of the target vehicle needs to be recognized, the feature map is obtained. Because the feature map represents probabilities that each feature point is located on different components of the target vehicle, the plurality of components of the target vehicle included in the feature map is determined based on the plurality of feature points in the feature map. In addition, a position relationship between components on a vehicle plane of the target vehicle is fixed. Therefore, the vehicle plane of the target vehicle is determined based on the position relationship between the plurality of components, and the posture of the target vehicle is further recognized based on the determined vehicle plane. The process of obtaining the vehicle plane includes a plurality of iterations. In each iteration, for example, in an $i^{th}$ iteration, a component recognition result of a target feature point is determined based on probabilities that the target feature point is located on different components in an $(i-1)^{th}$ iteration, where the component recognition result reflects a component on which the target feature point is located. In this way, a plurality of to-be-determined components is determined based on component recognition results. Then, a vehicle plane recognition result is determined based on a position relationship between the plurality of to-be-determined components. The component recognition result has a first result confidence and the vehicle plane recognition result has a second result confidence. In this way, probabilities that the target feature point is located on different components in the $i^{th}$ iteration are obtained by updating based on the first result confidence and the second result confidence. It is ensured that the probabilities corresponding to the $(i-1)^{th}$ iteration are adjusted to a direction having a higher confidence, so as to obtain more accurate and credible probabilities. Because local features of the components are considered in the method, and there is an association relationship between the local features of the components and the vehicle plane, that is, a relative position relationship of the components on the vehicle plane is fixed, a credible vehicle plane recognition result can be obtained more quickly by combining the component recognition result and the vehicle plane recognition result. Therefore, the posture of the target vehicle can be recognized more quickly, and the real-time requirement in the autonomous driving field can be easily met.

It should be understood that, except the first iteration, probabilities that a target feature point is located on different components in other iterations are obtained by updating probabilities that the target feature point is located on different components in a previous iteration. Therefore, the probabilities that the target feature point is located on different components in the current iteration are more accurate than the probabilities that the target feature point is located on different components in the previous iteration, and a more accurate component recognition result can be obtained based on the more accurate probabilities. Next, how to obtain, by updating based on the first result confidence and the second result confidence, the probabilities that the target feature point is located on different components in the $i^{th}$ iteration is described.

When the probabilities that the target feature point is located on different components in the $i^{th}$ iteration are updated, it is ensured that the probabilities that the target feature point is located on different components in the $(i-1)^{th}$ iteration are adjusted to a direction having a higher recognition result confidence, so as to obtain more accurate and credible probabilities. Therefore, in this embodiment, based on a magnitude relationship between the first result confidence and the second result confidence, determining a recognition result with a higher confidence is used as a direction for adjusting the probabilities.

When the first result confidence is higher than the second result confidence, that is, the component recognition result is more credible than the vehicle plane recognition result, the probabilities that the target feature point is located on different components in the $i^{th}$ iteration should be obtained by updating based on the component recognition result. If a target component is a component indicated by the component recognition result, when the component recognition result of the target feature point indicates that the target feature point is located on the target component, a probability that the target feature point is located on the target component is increased by a preset first change amount. A component not indicated by the component recognition result is a non-target component, this indicates that the target feature point is not located on the component, and a probability that the target feature point is located on the non-target component is decreased by a preset second change amount. The first change amount and the second change amount may be the same or may be different. The first change amount and the second change amount may be fixed values, or may be variable values according to a preset rule. For example, if the component recognition result of the target feature point includes that the target feature point is located on a vehicle side door, and has a first result confidence of 80%, where the vehicle side door is the target component, a trunk may be used as a non-target component. The vehicle plane recognition result includes that the target feature point is not located on the vehicle side plane and has a second result confidence of 50%. Because the first result confidence is higher than the second result confidence, it is a more credible recognition result that the target feature point is located on the vehicle side door, the probability that the target feature point is located on the vehicle side door can be increased, and the probability that the target feature point is located on the trunk can be decreased. In this way, a probability that the target feature point is located on the vehicle side door in the $i^{th}$ iteration is increased relative to a probability that the target feature point is located on the vehicle side door in the $(i-1)^{th}$ iteration, and a probability that the target feature point is located on the trunk in the $i^{th}$ iteration is decreased relative to a probability that the target feature point is located on the trunk in the $(i-1)^{th}$ iteration. In this case, in an $(i+1)^{th}$ iteration, when the component recognition result of the target feature point is determined based on the probabilities that the target feature point is located on different components in the $i^{th}$ iteration, it is easier to obtain the component recognition result that the target feature point is located on the vehicle side door, and it is more difficult to obtain the component recognition result that the target feature point is located on the trunk.

It should be noted that, increasing, by the preset first change amount, the probability that the target feature point is located on the target component and decreasing, by the preset second change amount, the probability that the target feature point is located on the non-target component may be simultaneously performed, or only one of the two may be performed.

When the first result confidence is lower than the second result confidence, the vehicle plane recognition result is more credible. If a target vehicle plane is a vehicle plane indicated by the vehicle plane recognition result, a vehicle plane not indicated by the vehicle plane recognition result is a non-target vehicle plane, and the target feature point is located on the target vehicle plane, the target feature point is located on at least one component on the target vehicle plane. The non-target vehicle plane is a vehicle plane on which the target feature point is not located, and the target feature point is likewise not located on at least one component of the non-target vehicle plane. Therefore, when the vehicle plane recognition result is more credible, a probability that the target feature point is located on at least one component on the target vehicle plane may be increased by a preset third change amount, and a probability that the target feature point is located on at least one component on the non-target vehicle plane may be decreased by a preset fourth change amount. Therefore, in the $(i+1)^{th}$ iteration, when the component recognition result of the target feature point is determined based on the probabilities that the target feature point is located on different components in the $i^{th}$ iteration, it is easier to obtain the component recognition result that the target feature point is located on at least one component of the target vehicle plane, and it is more difficult to obtain the component recognition result that the target feature point is located on at least one component of the non-target vehicle plane, thereby improving accuracy of the component recognition result and improving accuracy of the vehicle plane recognition result.

It should be noted that, increasing, by the preset third change amount, the probability that the target feature point is located on at least one component of the target vehicle plane and decreasing, by the preset fourth change amount, the probability that the target feature point is located on at least one component of the non-target vehicle plane may be simultaneously performed, or only one of the two may be performed.

When the first result confidence is equal to the second result confidence, which recognition result to be used as a basis for updating to obtain the probabilities that the target feature point is located on different components in the $i^{th}$ iteration may be determined based on a calculation amount relationship between determining the component recognition result and determining the vehicle plane recognition result. In an implementation, the probabilities that the target feature point is located on different components in the $i^{th}$ iteration may be obtained by updating based on a recognition result with a larger calculation amount. Generally, a calculation amount of determining the component recognition result by using the convolutional neural network is greater than a calculation amount of determining the vehicle plane recognition result by using the fully connected layer. Therefore, in this embodiment, the probabilities that the target feature point is located on different components in the $i^{th}$ iteration may be obtained by updating based on the component recognition result. For an update manner thereof, references may be made to an update manner used when the first result confidence is higher than the second result confidence.

It should be noted that, the vehicle plane of the target vehicle is determined after a plurality of iterations. To accurately recognize the vehicle plane of the target vehicle, a vehicle plane recognition result obtained when the iteration stops should be accurate and credible. An iteration stopping condition also affects the accuracy of the vehicle plane recognition result.

In a possible implementation, for each iteration, for example, the $i^{th}$ iteration, whether the $i^{th}$ iteration satisfies the iteration stopping condition may be determined. Specifically, when a first cost is less than a first threshold, a plurality of iterations are ended.

The feature map is a multilayer feature map, each layer of feature map corresponds to one component in the target vehicle, and the first cost is obtained based on the following formula:

$$f_L^i = \sum_{c=1}^{C} \sum_{P} W1(P) \cdot ||L_c^i(P) - L_c^*(P)||_2^2 \qquad (3)$$

where $f_L^i$ denotes the first cost of the $i^{th}$ iteration, $||L_c^i(P) - L_c^*(P)||_2^2$ denotes a square of a Euclidean norm for $L_c^i(P) - L_c^*(P)$, $L_c^i(P)$ is a second result confidence corresponding to a feature point P in a $c^{th}$ layer of feature map, and $L_c^*(P)$ is a second preset confidence corresponding to the feature point P in the $c^{th}$ layer of feature map, where the $c^{th}$ layer of feature map includes feature points located on a same component; and **W1(P)** represents a weight of the second result confidence of the feature point P.

The first cost may reflect a degree of difference between the second result confidence and a second preset confidence. A smaller degree of difference between the second result confidence and the second preset confidence indicates higher accuracy of the vehicle plane recognition result. When the difference between the two is small enough, for example, when a calculation result of the first cost is less than the first threshold, it may be considered that the obtained vehicle plane recognition result is accurate. In this case, the iteration may be ended, and the vehicle plane recognition result obtained in the iteration is a final vehicle plane recognition result. In addition, in the iteration process, a component recognition result and a vehicle plane recognition result can be correctly guided in a next iteration based on the first cost.

It should be understood that, in this embodiment, although the vehicle plane recognition result is finally obtained to determine the posture of the target vehicle based on the vehicle plane recognition result, the finally obtained vehicle plane recognition result further needs to depend on the component recognition result. Therefore, to further improve the accuracy of the component recognition result and further improve accuracy of posture recognition of the target vehicle, not only the first cost of the vehicle plane recognition result needs to be considered, but also a third cost of the component recognition result needs to be comprehensively considered, so as to determine the iteration ending condition based on a comprehensive cost, such as a second cost. Therefore, in a possible implementation, when the second cost is less than a second threshold, the plurality of iterations are ended.

The second cost is obtained based on the following formula:

$$f = \sum_{i=1}^{I}(f_S^i + f_L^i) \tag{4}$$

where f is the second cost of the i$^{th}$ iteration. $f_L^i$ is the first cost, $f_S^i$ is a third cost of the i$^{th}$ iteration, I is a quantity of iterations, and the third cost is obtained based on the following formula:

$$f_S^i = \sum_{c=1}^{J}\sum_{P} W2(P) \cdot ||L_c^i(P) - L_c^*(P)||_2^2 \tag{5}$$

where $f_S^i$ denotes the third cost of the i$^{th}$ iteration, $||L_c^i(P) - L_c^*(P)||_2^2$ denotes the square of the Euclidean norm for $L_c^i(P) - L_c^*(P)$, $L_c^i(P)$ is a first result confidence corresponding to the feature point P in the c$^{th}$ layer of feature map, and $L_c^i(P)$ is a first preset confidence corresponding to the feature point P in the c$^{th}$ layer of feature map; and *W2(P)* denotes a weight of the first result confidence of the feature point P.

The third cost may reflect a degree of difference between the first result confidence and the first preset confidence. A smaller difference between the first result confidence and the first preset confidence indicates higher accuracy of the component recognition result.

The second cost is a sum of the first cost and the third cost corresponding to the plurality of iterations. A smaller second cost indicates a more credible vehicle plane recognition result and component recognition result. When the second cost is less than the second threshold, it may be considered that both the obtained vehicle plane recognition result and component recognition result are relatively accurate and can be used to recognize the posture of the target vehicle, and therefore, the plurality of iterations are ended.

In some cases, due to inadvertence, not all feature points are marked. As a result, the feature map does not reflect probabilities that some feature points are located on the components of the target vehicle. For example, feature points, whose probabilities of being located on a component of the target vehicle are not reflected in the feature map, are actually located on a target component. Due to missing marking, the feature points are not predicted to be located on the target component during prediction, and component recognition results of the feature points are greatly deviated from actual results. To avoid impact of the feature points whose probabilities of being located on the component of the target vehicle are not reflected in the feature map on the calculation loss function, weights of first result confidences or second result confidences corresponding to the feature points may be set to 0, that is, in the foregoing formula (3), *W1(P)* = 0, and in formula (4), *W2(P)* = 0.

To better implement the foregoing solutions in the embodiments of this application, the following further provides related apparatuses for implementing the foregoing solutions.

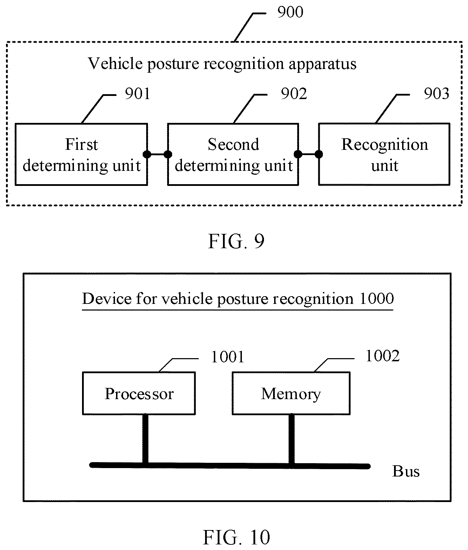

Referring to FIG. 9, an embodiment of this application provides a vehicle posture recognition apparatus. The apparatus includes a first determining unit 901, a second determining unit 902, and a recognition unit 903.

The first determining unit 901 is configured to determine, based on a plurality of feature points in a feature map, a plurality of components of a target vehicle included in the feature map, where the feature map is used to represent probabilities that each feature point is located on different components of the target vehicle.

The second determining unit 902 is configured to determine a vehicle plane of the target vehicle based on a position relationship between the plurality of components.

The recognition unit 903 is configured to recognize a posture of the target vehicle based on the vehicle plane.

The plurality of feature points includes a target feature point, the vehicle plane is determined through a plurality of iterations, and in an i$^{th}$ iteration in the plurality of iterations, the first determining unit 901 is configured to:

determine a component recognition result of the target feature point based on probabilities that the target feature point is located on different components in an (i-1)$^{th}$ iteration, where the component recognition result has a first result confidence; and

determine a plurality of to-be-determined components based on component recognition results of the plurality of feature points.

The second determining unit 902 is configured to:

determine a vehicle plane recognition result of the target feature point based on a position relationship between the plurality of to-be-determined components, where the vehicle plane recognition result has a second result confidence; and

obtain, by updating based on the first result confidence and the second result confidence, probabilities that the target feature point is located on different components in the $i^{th}$ iteration.

Optionally, when the first result confidence is higher than the second result confidence, the second determining unit is configured to:
increase, by a preset first change amount, a probability that the target feature point is located on a target component, and/or decrease, by a preset second change amount, a probability that the target feature point is located on a non-target component, where the target component is a component indicated by the component recognition result.

Optionally, when the first result confidence is lower than the second result confidence, the second determining unit is configured to:
increase, by a preset third change amount, a probability that the target feature point is located on at least one component on a target vehicle plane, and/or decrease, by a preset fourth change amount, a probability that the target feature point is located on at least one component on a non-target vehicle plane, where the target vehicle plane is a vehicle plane indicated by the vehicle plane recognition result.

The first determining unit is configured to:
determine a component corresponding to a highest probability as a component on which the target feature point is located.

Optionally, the second determining unit is configured to:

compare the position relationship between the plurality of to-be-determined components with a plurality of preset position relationships, where each preset position relationship corresponds to one vehicle plane; and
determine a vehicle plane corresponding to a preset position relationship with a smallest difference as a vehicle plane on which the target feature point is located.

Optionally, in the $i^{th}$ iteration, the apparatus further includes a judging unit.

When the judging unit determines that a first cost is less than a first threshold, the plurality of iterations are ended.

The feature map is a multilayer feature map, each layer of feature map corresponds to one component in the target vehicle, and the first cost is obtained based on the following formula:

$$f_L^i = \sum_{c=1}^{C} \sum_{P} W1(P) \cdot ||L_c^i(P) - L_c^*(P)||_2^2$$

where $f_L^i$ denotes the first cost of the $i^{th}$ iteration, $||L_c^i(P) - L_c^*(P)||_2^2$ denotes a square of a Euclidean norm for $L_c^i(P) - L_c^*(P)$, $L_c^i(P)$ is a second result confidence corresponding to a feature point P in a $c^{th}$ layer of feature map, and $L_c^*(P)$ is a second preset confidence corresponding to the feature point P in the $c^{th}$ layer of feature map, where the $c^{th}$ layer of feature map includes feature points located on a same component; and **W1(P)** represents a weight of the second result confidence of the feature point P.

Optionally, in the $i^{th}$ iteration, the judging unit is further configured to:
when the judging unit determines that a second cost is less than a second threshold, end the plurality of iterations.

The second cost is obtained based on the following formula:

$$f = \sum_{i=1}^{I} (f_S^i + f_L^i)$$

where f is the second cost of the $i^{th}$ iteration. $f_L^i$ is the first cost, $f_S^i$ is a third cost of the $i^{th}$ iteration, I is a quantity of iterations, and the third cost is obtained based on the following formula:

$$f_S^i = \sum_{c=1}^{J} \sum_{P} W2(P) \cdot ||L_c^i(P) - L_c^*(P)||_2^2$$

where $f_s^i$ denotes the third cost of the ith iteration, $\|L_c^i(P) - L_c^*(P)\|_2^2$ denotes the square of the Euclidean norm for $L_c^i(P) - L_c^*(P)$, $L_c^i(P)$ is a first result confidence corresponding to the feature point P in the cth layer of feature map, and $L_c^*(P)$ is a first preset confidence corresponding to the feature point P in the cth layer of feature map; and $W2(P)$ denotes a weight of the first result confidence of the feature point P.

Optionally, $W1(P)$ or $W2(P)$ corresponding to a feature point whose probability of being located on a component of the target vehicle in the feature map is not reflected is set to 0.

In addition, an embodiment of this application further provides a device for vehicle posture recognition. Referring to FIG. 10, a device 1000 for vehicle posture recognition includes:
a processor 1001 and a memory 1002 (there may be one or more processors 1001 in the device 1000 for vehicle posture recognition, and one processor is used as an example in FIG. 10). In some embodiments of this application, the processor 1001 and the memory 1002 may be connected.

The memory 1002 may include a read-only memory and a random access memory, and provide an instruction and data for the processor 1001. A part of the memory 1002 may further include an NVRAM. The memory 1002 stores an operating system and an operation instruction, an executable module or a data structure, a subset thereof, or an extended set thereof. The operation instruction may include various operation instructions for performing various operations. The operating system may include various system programs, for implementing various basic services and processing hardware-based tasks.

The processor 1001 controls an operation of the device for vehicle posture recognition. In a specific application, components of the device for vehicle posture recognition are coupled together by using a bus system. In addition to a data bus, the bus system may further include a power supply bus, a control bus, a status signal bus, and the like. However, for clear description, various types of buses in the figure are marked as the bus system.

The methods disclosed in the embodiments of this application may be applied to the processor 1001, or may be implemented by the processor 1001. The processor 1001 may be an integrated circuit chip and has a signal processing capability. In an implementation process, steps of the foregoing method may be implemented by using an integrated logic circuit of hardware in the processor 1001, or by using an instruction in a form of software. The processor 1001 may be a general purpose processor, a DSP, an ASIC, an FPGA or another programmable logical device, a discrete gate or transistor logic device, or a discrete hardware component. The processor may implement or perform the methods, steps, and logical block diagrams that are disclosed in the embodiments of this application. The general-purpose processor may be a microprocessor, or the processor may be any conventional processor or the like. The steps in the methods disclosed with reference to the embodiments of this application may be directly performed and completed by a hardware decoding processor, or may be performed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 1002, and a processor 1001 reads information in the memory 1002 and completes the steps in the foregoing methods in combination with hardware of the processor.

During specific implementation, the processor 1001 is configured to implement the following operations:

determining, based on a plurality of feature points in a feature map, a plurality of components of a target vehicle included in the feature map, where the feature map is used to represent probabilities that each feature point is located on different components of the target vehicle;
determining a vehicle plane of the target vehicle based on a position relationship between the plurality of components; and
recognizing a posture of the target vehicle based on the vehicle plane;
where the plurality of feature points include a target feature point, the vehicle plane is determined through a plurality of iterations, and an ith iteration in the plurality of iterations includes:

determining a component recognition result of the target feature point based on probabilities that the target feature point is located on different components in an (i-1)th iteration, where the component recognition result has a first result confidence;
determining a plurality of to-be-determined components based on component recognition results of the plurality of feature points;
determining a vehicle plane recognition result of the target feature point based on a position relationship between the plurality of to-be-determined components, where the vehicle plane recognition result has a second result confidence; and
obtaining, by updating based on the first result confidence and the second result confidence, probabilities that the target feature point is located on different components in the i$^{th}$ iteration,

Optionally, the processor 1001 is further configured to implement the following operations:
increasing, by a preset first change amount, a probability that the target feature point is located on a target component, and/or decreasing, by a preset second change amount, a probability that the target feature point is located on a non-target component, where the target component is a component indicated by the component recognition result.
Optionally, the processor 1001 is further configured to implement the following operations:
increasing, by a preset third change amount, a probability that the target feature point is located on at least one component on a target vehicle plane, and/or decreasing, by a preset fourth change amount, a probability that the target feature point is located on at least one component on a non-target vehicle plane, where the target vehicle plane is a vehicle plane indicated by the vehicle plane recognition result.
The processor 1001 is further configured to implement the following operations:
determining a component corresponding to a highest probability as a component on which the target feature point is located.
Optionally, the processor 1001 is further configured to implement the following operations:

comparing the position relationship between the plurality of to-be-determined components with a plurality of preset position relationships, where each preset position relationship corresponds to one vehicle plane; and
determining a vehicle plane corresponding to a preset position relationship with a smallest difference as a vehicle plane on which the target feature point is located.

Optionally, the processor 1001 is further configured to implement the following operations:

when a first cost is less than a first threshold, ending the plurality of iterations;
where the feature map is a multilayer feature map, each layer of feature map corresponds to one component in the target vehicle, and the first cost is obtained based on the following formula:

$$f_L^i = \sum_{c=1}^{C} \sum_{P} W1(P) \cdot ||L_c^i(P) - L_c^*(P)||_2^2$$

where $f_L^i$ denotes the first cost of the i$^{th}$ iteration, $||L_c^i(P) - L_c^*(P)||_2^2$ denotes a square of a Euclidean norm for $L_c^i(P) - L_c^*(P)$, $L_c^i(P)$ is a second result confidence corresponding to a feature point P in a c$^{th}$ layer of feature map, and $L_c^*(P)$ is a second preset confidence corresponding to the feature point P in the c$^{th}$ layer of feature map, where the c$^{th}$ layer of feature map includes feature points located on a same component; and $W1(P)$ represents a weight of the second result confidence of the feature point P.

Optionally, the processor 1001 is further configured to implement the following operations:
when a second cost is less than a second threshold, ending the plurality of iterations.
The second cost is obtained based on the following formula:

$$f = \sum_{i=1}^{I} (f_S^i + f_L^i)$$

where f is the second cost of the i$^{th}$ iteration. $f_L^i$ is the first cost, $f_S^i$ is a third cost of the i$^{th}$ iteration, I is a quantity of iterations, and the third cost is obtained based on the following formula:

$$f_S^i = \sum_{c=1}^{J} \sum_{P} W2(P) \cdot ||L_c^i(P) - L_c^*(P)||_2^2$$

where $f_S^i$ denotes the third cost of the i$^{th}$ iteration, $||L_c^i(P) - L_c^*(P)||_2^2$ denotes the square of the Euclidean norm for

$L_c^i(P) - L_c^*(P)$, $L_c^i(P)$ is a first result confidence corresponding to the feature point P in the $c^{th}$ layer of feature map, and $L_c^*(P)$ is a first preset confidence corresponding to the feature point P in the $c^{th}$ layer of feature map; and **W2(P)** denotes a weight of the first result confidence of the feature point P.

Optionally, the processor 1001 is further configured to implement the following operation:
setting **W1(P)** or **W2(P)** corresponding to a feature point whose probability of being located on a component of the target vehicle in the feature map is not reflected to 0.

An embodiment of this application further provides a computer-readable storage medium, the computer-readable storage medium is configured to store program code, and the program code is used to perform the steps described in the foregoing method embodiments.

An embodiment of this application further provides a computer program product that includes computer readable instructions. The computer readable instructions, when are run on a computer, cause the computer to perform the vehicle posture recognition method in the foregoing aspects.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected depending on actual requirements to achieve the objectives of the solutions in the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in a form of a software product. The computer software product is stored in a storage medium and includes instructions for instructing a computer device (which may be a personal computer, a server, a network device, or the like) to perform the steps of the methods described in the embodiments of the present invention. The foregoing storage medium includes: any medium that can store program code, such as a USB flash drive, a removable hard disk, a read-only memory (read-only memory, ROM), a random access memory (random access memory, RAM), a magnetic disk, or an optical disc.

**Claims**

1. A vehicle posture recognition method, comprising:

   determining (201), based on a plurality of feature points in a feature map obtained from point cloud data, a plurality of components of a target vehicle comprised in the feature map, wherein the feature map is used to represent probabilities that each feature point is located on different components of the target vehicle;
   determining (202) a vehicle plane of the target vehicle based on a position relationship between the plurality of components; and
   recognizing (203) a posture of the target vehicle based on the vehicle plane;
   wherein the vehicle plane is determined through a plurality of iterations, and an $i^{th}$ iteration in the plurality of iterations comprises:

   determining a component recognition result of a target feature point from the plurality of feature points based on probabilities that the target feature point is located on different components in an $(i-1)^{th}$ iteration, wherein the component recognition result has a first result confidence, and wherein the component recognition result indicates a component on which the target feature point is located;

and in this way determining the plurality of components based on component recognition results of the plurality of feature points;

determining a vehicle plane recognition result of the target feature point based on a position relationship between the plurality of components by comparing the position relationship with a plurality of preset position relationships, wherein each preset position relationship corresponds to one vehicle plane, wherein the vehicle plane recognition result has a second result confidence;

obtaining probabilities that the target feature point is located on different components in the $i^{th}$ iteration by updating probabilities that the target feature point is located on different components in the $(i-1)^{th}$ iteration to have a higher recognition result confidence based on a magnitude relationship between the first result confidence and the second result confidence,

and

wherein the determining the component recognition result of the target feature point based on probabilities that the target feature point is located on different components in an $(i-1)^{th}$ iteration comprises:

determining a component corresponding to a highest probability as the component on which the target feature point is located.

2. The method according to claim 1, wherein when the first result confidence is higher than the second result confidence, the obtaining, by updating based on the magnitude relationship between the first result confidence and the second result confidence, probabilities that the target feature point is located on different components in the $i^{th}$ iteration comprises:

increasing, by a preset first change amount, a probability that the target feature point is located on a target component, and/or decreasing, by a preset second change amount, a probability that the target feature point is located on a non-target component, wherein the target component is a component indicated by the component recognition result.

3. The method according to claim 2, wherein when the first result confidence is lower than the second result confidence, the obtaining, by updating based on the magnitude relationship between the first result confidence and the second result confidence, probabilities that the target feature point is located on different components in the $i^{th}$ iteration comprises:

increasing, by a preset third change amount, a probability that the target feature point is located on at least one component on a target vehicle plane, and/or decreasing, by a preset fourth change amount, a probability that the target feature point is located on at least one component on a non-target vehicle plane, wherein the target vehicle plane is a vehicle plane indicated by the vehicle plane recognition result.

4. The method according to any one of claims 1 to 3, wherein the determining the vehicle plane recognition result of the target feature point based on the position relationship between the plurality of components comprises:

determining a vehicle plane corresponding to a preset position relationship with a smallest difference as a vehicle plane on which the target feature point is located.

5. The method according to any one of claims 1 to 4, wherein the $i^{th}$ iteration further comprises:

when a first cost is less than a first threshold, ending the plurality of iterations;
wherein the feature map is a multilayer feature map, each layer of feature map corresponds to one component in the target vehicle, and the first cost is obtained based on the following formula:

$$f_L^i = \sum_{c=1}^{C} \sum_{P} W1(P) \cdot ||L_c^i(P) - L_c^*(P)||_2^2$$

wherein $f_L^i$ denotes the first cost of the $i^{th}$ iteration, $||L_c^i(P) - L_c^*(P)||_2^2$ denotes a square of a Euclidean norm for $L_c^i(P) - L_c^*(P)$, $L_c^i(P)$ is a second result confidence corresponding to a feature point P in a $c^{th}$ layer of feature map, and $L_c^*(P)$ is a second preset confidence corresponding to the feature point P in the $c^{th}$ layer of feature map, wherein the $c^{th}$ layer of feature map comprises feature points located on a same component; and $W1(P)$ represents a weight of the second result confidence of the feature point P.

6. The method according to claim 5, wherein the i$^{th}$ iteration further comprises:

when a second cost is less than a second threshold, ending the plurality of iterations;
wherein the second cost is obtained based on the following formula:

$$f = \sum_{i=1}^{I} (f_S^i + f_L^i)$$

wherein f is the second cost of the i$^{th}$ iteration, $f_L^i$ is the first cost, $f_S^i$ is a third cost of the i$^{th}$ iteration, I is a quantity of iterations, and the third cost is obtained based on the following formula:

$$f_S^i = \sum_{c=1}^{J} \sum_{P} W2(P) \cdot ||L_c^i(P) - L_c^*(P)||_2^2$$

wherein $f_S^i$ denotes the third cost of the i$^{th}$ iteration, $||L_c^i(P) - L_c^*(P)||_2^2$ denotes the square of the Euclidean norm for $L_c^i(P) - L_c^*(P)$, $L_c^i(P)$ is a first result confidence corresponding to the feature point P in the c$^{th}$ layer of feature map, and $L_c^*(P)$ is a first preset confidence corresponding to the feature point P in the c$^{th}$ layer of feature map; and **W2(P)** denotes a weight of the first result confidence of the feature point P.

7. The method according to claim 5 or 6, wherein **W1(P)** or **W2(P)** corresponding to a feature point whose probability of being located on a component of the target vehicle in the feature map is not reflected is set to 0.

8. A vehicle posture recognition apparatus, comprising a first determining unit (901), a second determining unit (902), and a recognition unit (903), wherein

the first determining unit (901) is configured to determine, based on a plurality of feature points in a feature map obtained from a data point cloud, a plurality of components of a target vehicle comprised in the feature map, wherein the feature map is used to represent probabilities that each feature point is located on different components of the target vehicle;
the second determining unit (902) is configured to determine a vehicle plane of the target vehicle based on a position relationship between the plurality of components; and
the recognition unit (903) is configured to recognize a posture of the target vehicle based on the vehicle plane;
wherein the vehicle plane is determined through a plurality of iterations, and in an i$^{th}$ iteration in the plurality of iterations, the first determining unit (901) is configured to:

determine a component recognition result of a target feature point from the plurality of feature points based on probabilities that the target feature point is located on different components in an (i-1)$^{th}$ iteration, wherein the component recognition result has a first result confidence, and wherein the component recognition result indicates a component on which the target feature point is located;
in this way determine the plurality of components based on component recognition results of the plurality of feature points; and
determining a component corresponding to a highest probability as the component on which the target feature point is located; and
the second determining unit (902) is configured to:

determine a vehicle plane recognition result of the target feature point based on a position relationship between the plurality of components by comparing the position relationship with a plurality of preset position relationships, wherein each preset position relationship corresponds to one vehicle plane, wherein the vehicle plane recognition result has a second result confidence; and
obtain probabilities that the target feature point is located on different components in the i$^{th}$ iteration by updating probabilities that the target feature point is located on different components in the (i-1)$^{th}$ iteration to have a higher recognition result confidence based on a magnitude relationship between the first result confidence and the second result confidence.

9.  A computer-readable storage medium, wherein the computer-readable storage medium is configured to store instructions which, when executed by a computer, cause the computer to perform the vehicle posture recognition method according to any one of claims 1 to 7.


**Patentansprüche**

1.  Verfahren zur Erkennung der Haltung eines Fahrzeugs, umfassend:

    Bestimmen (201) einer Vielzahl von Komponenten eines Zielfahrzeugs, die in der Merkmalskarte enthalten sind, basierend auf einer Vielzahl von Merkmalspunkten in einer Merkmalskarte, die aus Punktwolkendaten erlangt wurde, wobei die Merkmalskarte verwendet wird, um Wahrscheinlichkeiten darzustellen, dass sich jeder Merkmalspunkt auf unterschiedlichen Komponenten des Zielfahrzeugs befindet;
    Bestimmen (202) einer Fahrzeugebene des Zielfahrzeugs basierend auf einer Positionsbeziehung zwischen der Vielzahl von Komponenten; und
    Erkennen (203) einer Haltung des Zielfahrzeugs basierend auf der Fahrzeugebene;
    wobei die Fahrzeugebene über eine Vielzahl von Iterationen bestimmt wird und eine i-te Iteration in der Vielzahl von Iterationen Folgendes umfasst:

    Bestimmen eines Komponentenerkennungsergebnisses eines Zielmerkmalspunkts aus der Vielzahl von Merkmalspunkten basierend auf Wahrscheinlichkeiten, dass sich der Zielmerkmalspunkt auf verschiedenen Komponenten in einer (i-1)-ten Iteration befindet, wobei das Komponentenerkennungsergebnis eine erste Ergebniskonfidenz aufweist und wobei das Komponentenerkennungsergebnis eine Komponente angibt, auf welcher sich der Zielmerkmalspunkt befindet;
    und, auf diese Weise, Bestimmen der Vielzahl von Komponenten basierend auf Komponentenerkennungsergebnissen der Vielzahl von Merkmalspunkten;
    Bestimmen eines Ergebnisses zur Erkennung der Fahrzeugebene des Zielmerkmalspunkts basierend auf einer Positionsbeziehung zwischen der Vielzahl von Komponenten durch Vergleichen der Positionsbeziehung mit einer Vielzahl von voreingestellten Positionsbeziehungen, wobei jede voreingestellte Positionsbeziehung einer Fahrzeugebene entspricht, wobei das Ergebnis zur Erkennung der Fahrzeugebene eine zweite Ergebniskonfidenz aufweist;
    Erlangen von Wahrscheinlichkeiten, dass sich der Zielmerkmalspunkt auf verschiedenen Komponenten in der i-ten Iteration befindet, durch Aktualisieren von Wahrscheinlichkeiten, dass sich der Zielmerkmalspunkt auf verschiedenen Komponenten in der (i-1)-ten Iteration befindet, um basierend auf einer Größenbeziehung zwischen der ersten Ergebniskonfidenz und der zweiten Ergebniskonfidenz eine höhere Erkennungsergebniskonfidenz aufzuweisen, und
    wobei das Bestimmen des Komponentenerkennungsergebnisses des Zielmerkmalspunkts basierend auf Wahrscheinlichkeiten, dass sich der Zielmerkmalspunkt auf verschiedenen Komponenten in einer (i-1)-ten Iteration befindet, Folgendes umfasst:
    Bestimmen einer Komponente entsprechend der höchsten Wahrscheinlichkeit als die Komponente, auf welcher sich der Zielmerkmalspunkt befindet.

2.  Verfahren nach Anspruch 1, wobei, wenn die erste Ergebniskonfidenz höher als die zweite Ergebniskonfidenz ist, das Erlangen von Wahrscheinlichkeiten, dass sich der Zielmerkmalspunkt auf verschiedenen Komponenten in der i-ten Iteration befindet, durch Aktualisieren basierend auf der Größenbeziehung zwischen der ersten Ergebniskonfidenz und der zweiten Ergebniskonfidenz Folgendes umfasst:
    Erhöhen einer Wahrscheinlichkeit, dass sich der Zielmerkmalspunkt auf einer Zielkomponente befindet, um einen voreingestellten ersten Änderungsbetrag und/oder Verringern einer Wahrscheinlichkeit, dass sich der Zielmerkmalspunkt auf einer Nicht-Zielkomponente befindet, um einen voreingestellten zweiten Änderungsbetrag, wobei die Zielkomponente eine durch das Komponentenerkennungsergebnis angegebene Komponente ist.

3.  Verfahren nach Anspruch 2, wobei, wenn die erste Ergebniskonfidenz geringer als die zweite Ergebniskonfidenz ist, das Erlangen von Wahrscheinlichkeiten, dass sich der Zielmerkmalspunkt auf verschiedenen Komponenten in der i-ten Iteration befindet, durch Aktualisieren basierend auf der Größenbeziehung zwischen der ersten Ergebniskonfidenz und der zweiten Ergebniskonfidenz Folgendes umfasst:
    Erhöhen einer Wahrscheinlichkeit, dass sich der Zielmerkmalspunkt auf mindestens einer Komponente auf einer Zielfahrzeugebene befindet, um einen voreingestellten dritten Änderungsbetrag und/oder Verringern einer Wahrscheinlichkeit, dass sich der Zielmerkmalspunkt auf mindestens einer Komponente auf einer Nichtzielfahrzeugebene befindet, um einen voreingestellten vierten Änderungsbetrag, wobei die Zielfahrzeugebene eine durch das Ergebnis zur Erkennung der Fahrzeugebene angegebene Fahrzeugebene ist.

4. Verfahren nach einem der Ansprüche 1 bis 3, wobei das Bestimmen des Ergebnisses zur Erkennung der Fahrzeugebene des Zielmerkmalspunkts basierend auf der Positionsbeziehung zwischen der Vielzahl von Komponenten Folgendes umfasst:
Bestimmen einer Fahrzeugebene entsprechend einer voreingestellten Positionsbeziehung mit einer kleinsten Differenz als eine Fahrzeugebene, auf welcher sich der Zielmerkmalspunkt befindet.

5. Verfahren nach einem der Ansprüche 1 bis 4, wobei die i-te Iteration ferner Folgendes umfasst:

wenn erste Kosten kleiner als ein erster Schwellenwert sind, Beenden der Vielzahl von Iterationen;
wobei die Merkmalskarte eine mehrschichtige Merkmalskarte ist, jede Schicht der Merkmalskarte einer Komponente in dem Zielfahrzeug entspricht und die ersten Kosten basierend auf der folgenden Formel erlangt werden:

$$f_L^i = \sum_{c=1}^{C} \sum_{P} W1(P) \cdot ||L_c^i(P) - L_c^*(P)||_2^2$$

wobei $f_L^i$ die ersten Kosten der i-ten Iteration bezeichnet, $||L_c^i(P) - L_c^*(P)||_2^2$ in Quadrat einer euklidischen Norm für $L_c^i(P) - L_c^*(P)$ bezeichnet, $L_c^i(P)$ eine zweite Ergebniskonfidenz entsprechend einem Merkmalspunkt P in der c-ten Schicht der Merkmalskarte ist und $L_c^*(P)$ eine zweite voreingestellte Konfidenz entsprechend dem Merkmalspunkt P in der c-ten Schicht der Merkmalskarte ist, wobei die c-te Schicht der Merkmalskarte Merkmalspunkte umfasst, die sich auf derselben Komponente befinden; und $W1(P)$ eine Gewichtung der zweiten Ergebniskonfidenz des Merkmalspunkts P darstellt.

6. Verfahren nach Anspruch 5, wobei die i-te Iteration ferner Folgendes umfasst:

wenn zweite Kosten kleiner als ein zweiter Schwellenwert sind, Beenden der Vielzahl von Iterationen;
wobei die zweiten Kosten basierend auf der folgenden Formel erlangt werden:

$$f = \sum_{i=1}^{I} \left( f_S^i + f_L^i \right)$$

wobei f die zweiten Kosten der i-ten Iteration sind, $f_L^i$ die ersten Kosten sind, $f_S^i$ die dritten Kosten der i-ten Iteration sind, I eine Anzahl von Iterationen ist und die dritten Kosten basierend auf der folgenden Formel erlangt werden:

$$f_S^i = \sum_{c=1}^{J} \sum_{P} W2(P) \cdot ||L_c^i(P) - L_c^*(P)||_2^2$$

wobei $f_S^i$ die dritten Kosten der i-ten Iteration bezeichnet, $\left\|L_c^i(P) - L_c^*(P)\right\|_2^2$ das Quadrat der euklidischen Norm für $L_c^i(P) - L_c^*(P)$ bezeichnet, $L_c^i(P)$ eine erste Ergebniskonfidenz entsprechend dem Merkmalspunkt P in der c-ten Schicht der Merkmalskarte ist und $L_c^*(P)$ eine erste voreingestellte Konfidenz entsprechend dem Merkmalspunkt P in der c-ten Schicht der Merkmalskarte ist; und $W2(P)$ eine

Gewichtung der ersten Ergebniskonfidenz des Merkmalspunkts P bezeichnet.

7. Verfahren nach Anspruch 5 oder 6, wobei $W1(P)$ oder $W2(P)$ entsprechend einem Merkmalspunkt, dessen Wahrscheinlichkeit, sich auf einer Komponente des Zielfahrzeugs in der Merkmalskarte zu befinden, nicht wiedergegeben ist, auf 0 eingestellt ist.

8. Vorrichtung zur Erkennung der Haltung eines Fahrzeugs, umfassend eine erste Bestimmungseinheit (901), eine zweite Bestimmungseinheit (902) und eine Erkennungseinheit (903), wobei die erste Bestimmungseinheit (901) dazu konfiguriert ist, eine Vielzahl von Komponenten eines Zielfahrzeugs, die in der Merkmalskarte enthalten ist, basierend auf einer Vielzahl von Merkmalspunkten in einer Merkmalskarte, die aus einer Datenpunktwolke erlangt wurde, zu bestimmen, wobei die Merkmalskarte verwendet wird, um Wahrscheinlichkeiten darzustellen, dass sich jeder Merkmalspunkt auf unterschiedlichen Komponenten des Zielfahrzeugs befindet;

die zweite Bestimmungseinheit (902) dazu konfiguriert ist, eine Fahrzeugebene des Zielfahrzeugs basierend auf einer Positionsbeziehung zwischen der Vielzahl von Komponenten zu bestimmen; und
die Erkennungseinheit (903) dazu konfiguriert ist, eine Haltung des Zielfahrzeugs basierend auf der Fahrzeugebene zu erkennen; wobei die Fahrzeugebene über eine Vielzahl von Iterationen bestimmt wird und die erste Bestimmungseinheit (901) in einer i-ten Iteration in der Vielzahl von Iterationen dazu konfiguriert ist:

ein Komponentenerkennungsergebnis eines Zielmerkmalspunkts aus der Vielzahl von Merkmalspunkten basierend auf Wahrscheinlichkeiten zu bestimmen, dass sich der Zielmerkmalspunkt auf verschiedenen Komponenten in einer (i-1)-ten Iteration befindet, wobei das Komponentenerkennungsergebnis eine erste Ergebniskonfidenz aufweist und wobei das Komponentenerkennungsergebnis eine Komponente angibt, auf welcher sich der Zielmerkmalspunkt befindet;
auf diese Weise die Vielzahl von Komponenten basierend auf Komponentenerkennungsergebnissen der Vielzahl von Merkmalspunkten zu bestimmen; und
Bestimmen einer Komponente entsprechend einer höchsten Wahrscheinlichkeit als die Komponente, auf welcher sich der Zielmerkmalspunkt befindet; und
die zweite Bestimmungseinheit (902) dazu konfiguriert ist:

ein Ergebnis zur Erkennung der Fahrzeugebene des Zielmerkmalspunkts basierend auf einer Positionsbeziehung zwischen der Vielzahl von Komponenten durch Vergleichen der Positionsbeziehung mit einer Vielzahl von voreingestellten Positionsbeziehungen zu bestimmen, wobei jede voreingestellte Positionsbeziehung einer Fahrzeugebene entspricht, wobei das Ergebnis zur Erkennung der Fahrzeugebene eine zweite Ergebniskonfidenz aufweist; und
Wahrscheinlichkeiten zu erlangen, dass sich der Zielmerkmalspunkt auf verschiedenen Komponenten in der i-ten Iteration befindet, durch Aktualisieren von Wahrscheinlichkeiten, dass sich der Zielmerkmalspunkt auf verschiedenen Komponenten in der (i-1)-ten Iteration befindet, um eine höhere Erkennungsergebniskonfidenz basierend auf einer Größenbeziehung zwischen der ersten Ergebniskonfidenz und der zweiten Ergebniskonfidenz zu erlangen.

9. Computerlesbares Speichermedium, wobei das computerlesbare Speichermedium dazu konfiguriert ist, Anweisungen zu speichern, welche bei Ausführung durch einen Computer bewirken, dass der Computer das Verfahren zur Erkennung der Haltung eines Fahrzeugs nach einem der Ansprüche 1 bis 7 durchführt.

**Revendications**

1. Procédé de reconnaissance de posture de véhicule, comprenant :

la détermination (201), sur la base d'une pluralité de points caractéristiques dans une carte de caractéristiques obtenue à partir de données de nuage de points, d'une pluralité de composants d'un véhicule cible compris dans la carte de caractéristiques, dans lequel la carte de caractéristiques est utilisée pour représenter des probabilités que chaque point caractéristique soit situé sur différents composants du véhicule cible ;
la détermination (202) d'un plan de véhicule du véhicule cible sur la base d'une relation de position entre la pluralité de composants ; et
la reconnaissance (203) d'une posture du véhicule cible sur la base du plan de véhicule ;
dans lequel le plan de véhicule est déterminé via une pluralité d'itérations, et une i$^{ème}$ itération dans la pluralité d'itérations comprend :

la détermination d'un résultat de reconnaissance de composant d'un point caractéristique cible à partir de la pluralité de points caractéristiques sur la base de probabilités que le point caractéristique cible soit situé sur différents composants dans une $(i-1)^{ième}$ itération, dans lequel le résultat de reconnaissance de composant a une première confiance de résultat, et dans lequel le résultat de reconnaissance de composant indique un composant sur lequel le point caractéristique cible est situé ;

et de cette manière, la détermination de la pluralité de composants sur la base de résultats de reconnaissance de composants de la pluralité de points caractéristiques ;

la détermination d'un résultat de reconnaissance de plan de véhicule du point caractéristique cible sur la base d'une relation de position entre la pluralité de composants en comparant la relation de position avec une pluralité de relations de position prédéfinies, dans lequel chaque relation de position prédéfinie correspond à un plan de véhicule, dans lequel le résultat de reconnaissance de plan de véhicule a une seconde confiance de résultat ;

l'obtention de probabilités que le point caractéristique cible soit situé sur différents composants dans la $i^{ième}$ itération en mettant à jour des probabilités que le point caractéristique cible soit situé sur différents composants dans la $(i-1)^{ième}$ itération pour avoir une confiance de résultat de reconnaissance plus élevée sur la base d'une relation d'amplitude entre la première confiance de résultat et la seconde confiance de résultat, et

dans lequel la détermination du résultat de reconnaissance de composant du point caractéristique cible sur la base de probabilités que le point caractéristique cible soit situé sur différents composants dans une $(i-1)^{ième}$ itération comprend :

la détermination d'un composant correspondant à une probabilité la plus élevée comme étant le composant sur lequel le point caractéristique cible est situé.

2. Procédé selon la revendication 1, dans lequel, lorsque la première confiance de résultat est plus élevée que la seconde confiance de résultat, l'obtention, en mettant à jour sur la base de la relation d'amplitude entre la première confiance de résultat et la seconde confiance de résultat, de probabilités que le point caractéristique cible soit situé sur différents composants dans la $i^{ième}$ itération comprend :

l'augmentation, d'une première quantité de changement prédéfinie, d'une probabilité que le point caractéristique cible soit situé sur un composant cible, et/ou la diminution, d'une deuxième quantité de changement prédéfinie, d'une probabilité que le point caractéristique cible soit situé sur un composant non cible, dans lequel le composant cible est un composant indiqué par le résultat de reconnaissance de composant.

3. Procédé selon la revendication 2, dans lequel, lorsque la première confiance de résultat est moins élevée que la seconde confiance de résultat, l'obtention, en mettant à jour sur la base de la relation d'amplitude entre la première confiance de résultat et la seconde confiance de résultat, de probabilités que le point caractéristique cible soit situé sur différents composants dans la $i^{ième}$ itération comprend :

l'augmentation, d'une troisième quantité de changement prédéfinie, d'une probabilité que le point caractéristique cible soit situé sur au moins un composant sur un plan de véhicule cible, et/ou la diminution, d'une quatrième quantité de changement prédéfinie, d'une probabilité que le point caractéristique cible soit situé sur au moins un composant sur un plan de véhicule non cible, dans lequel le plan de véhicule cible est un plan de véhicule indiqué par le résultat de reconnaissance de plan de véhicule.

4. Procédé selon l'une quelconque des revendications 1 à 3, dans lequel la détermination du résultat de reconnaissance de plan de véhicule du point caractéristique cible, sur la base de la relation de position entre la pluralité de composants, comprend :

la détermination d'un plan de véhicule correspondant à une relation de position prédéfinie avec une différence la plus petite comme plan de véhicule sur lequel le point caractéristique cible est situé.

5. Procédé selon l'une quelconque des revendications 1 à 4, dans lequel la $i^{ième}$ itération comprend également :

lorsqu'un premier coût est inférieur à un premier seuil, la fin de la pluralité d'itérations ;

dans lequel la carte de caractéristiques est une carte de caractéristiques multicouche, chaque couche de carte de caractéristiques correspond à un composant dans le véhicule cible, et le premier coût est obtenu sur la base de la formule suivante :

$$f_L^i = \sum_{c=1}^{C} \sum_{P} W1(P) \cdot \left\| L_c^i(P) - L_c^*(P) \right\|_2^2$$

dans lequel $f_L^i$ désigne le premier coût de la i$^{\text{ème}}$ itération, $\left\| L_c^i(P) - L_c^*(P), L_c^i(P) \right\|_2^2$ désigne un carré d'une norme euclidienne pour $L_c^i(P) - L_c^*(P), L_c^i(P)$ est une seconde confiance de résultat correspondant à un point caractéristique P dans une c$^{\text{ème}}$ couche de carte de caractéristiques, et $L_c^*(P)$ est une seconde confiance prédéfinie correspondant au point caractéristique P dans la c$^{\text{ème}}$ couche de carte de caractéristiques, dans lequel la c$^{\text{ème}}$ couche de carte de caractéristiques comprend des points caractéristiques situés sur un même composant ; et $W1(P)$ représente un poids de la seconde confiance de résultat du point caractéristique P.

6. Procédé selon la revendication 5, dans lequel la i$^{\text{ème}}$ itération comprend également :

lorsqu'un deuxième coût est inférieur à un second seuil, la fin de la pluralité d'itérations ;
dans lequel le deuxième coût est obtenu sur la base de la formule suivante :

$$f = \sum_{i=1}^{I} \left( f_S^i + f_L^i \right)$$

dans lequel f est le deuxième coût de la i$^{\text{ème}}$ itération, $f_L^i$ est le premier coût, $f_S^i$ est un troisième coût de la i$^{\text{ème}}$ itération, I est une quantité d'itérations, et le troisième coût est obtenu sur la base de la formule suivante :

$$f_S^i = \sum_{c=1}^{J} \sum_{P} W2(P) \cdot \left\| L_c^i(P) - L_c^*(P) \right\|_2^2$$

dans lequel $f_S^i$ désigne le troisième coût de la i$^{\text{ème}}$ itération, $\left\| L_c^i(P) - L_c^*(P) \right\|_2^2$ désigne le carré de la norme euclidienne pour $L_c^i(P) - L_c^*(P), L_c^i(P)$ est une première confiance de résultat correspondant au point caractéristique P dans la c$^{\text{ème}}$ couche de carte de caractéristiques, et $L_c^*(P)$ est une première confiance prédéfinie correspondant au point caractéristique P dans la c$^{\text{ème}}$ couche de carte de caractéristiques ; et $W2(P)$ désigne un poids de la première confiance de résultat du point caractéristique P.

7. Procédé selon la revendication 5 ou 6, dans lequel $W1(P)$ ou $W2(P)$ correspondant à un point caractéristique dont une probabilité d'être situé sur un composant du véhicule cible dans la carte de caractéristiques n'est pas reflétée est fixé à 0.

8. Appareil de reconnaissance de posture de véhicule, comprenant une première unité de détermination (901), une seconde unité de détermination (902), et une unité de reconnaissance (903), dans lequel

la première unité de détermination (901) est configurée pour déterminer, sur la base d'une pluralité de points caractéristiques dans une carte de caractéristiques obtenue à partir d'un nuage de points de données, une pluralité de composants d'un véhicule cible compris dans la carte de caractéristiques, dans lequel la carte de caractéristiques est utilisée pour représenter des probabilités que chaque point caractéristique soit situé sur différents composants du véhicule cible ;
la seconde unité de détermination (902) est configurée pour déterminer un plan de véhicule du véhicule cible sur la base d'une relation de position entre la pluralité de composants ; et
l'unité de reconnaissance (903) est configurée pour reconnaître une posture du véhicule cible sur la base du plan de véhicule ; dans lequel le plan de véhicule est déterminé via une pluralité d'itérations, et dans une i$^{\text{ème}}$ itération de la pluralité d'itérations, la première unité de détermination (901) est configurée pour :

déterminer un résultat de reconnaissance de composant d'un point caractéristique cible à partir de la pluralité de points caractéristiques sur la base de probabilités que le point caractéristique cible soit situé sur différents composants dans une (i-1)$^{ième}$ itération, dans lequel le résultat de reconnaissance de composant a une première confiance de résultat, et dans lequel le résultat de reconnaissance de composant indique un composant sur lequel le point caractéristique cible est situé ;

de cette manière, déterminer la pluralité de composants sur la base de résultats de reconnaissance de composants de la pluralité de points caractéristiques ; et

la détermination d'un composant correspondant à une probabilité la plus élevée comme étant le composant sur lequel le point caractéristique cible est situé ; et

la seconde unité de détermination (902) est configurée pour :

déterminer un résultat de reconnaissance de plan de véhicule du point caractéristique cible sur la base d'une relation de position entre la pluralité de composants en comparant la relation de position avec une pluralité de relations de position prédéfinies, dans lequel chaque relation de position prédéfinie correspond à un plan de véhicule, dans lequel le résultat de reconnaissance de plan de véhicule a une seconde confiance de résultat ; et

obtenir des probabilités que le point caractéristique cible soit situé sur différents composants dans la i$^{ième}$ itération en mettant à jour des probabilités que le point caractéristique cible soit situé sur différents composants dans la (i-1)$^{ième}$ itération pour avoir une confiance de résultat de reconnaissance plus élevée sur la base d'une relation d'amplitude entre la première confiance de résultat et la seconde confiance de résultat.

9. Support de stockage lisible par ordinateur, dans lequel le support de stockage lisible par ordinateur est configuré pour stocker des instructions qui, lorsqu'elles sont exécutées par un ordinateur, amènent l'ordinateur à réaliser le procédé de reconnaissance de posture de véhicule selon l'une quelconque des revendications 1 à 7.

Feature map (probabilities that a feature point is located on different components of a target vehicle)

Determine a component recognition result of a target feature point based on probabilities that the target feature point is located on different components in an $(i-1)^{th}$ iteration

Determine a plurality of to-be-determined components based on component recognition results of a plurality of feature points

Vehicle plane of the target vehicle

Determine a vehicle plane recognition result of the target feature point based on a position relationship between the plurality of to-be-determined components

Posture of the target vehicle

Obtain, by updating based on a first result confidence and a second result confidence, probabilities that the target feature point is located on different components in an $i^{th}$ iteration

101

FIG. 1

Determine, based on a plurality of feature points in a feature map, a plurality of components of a target vehicle included in the feature map — 201

Determine a vehicle plane of the target vehicle based on a position relationship between the plurality of components — 202

Recognize a posture of the target vehicle based on the vehicle plane — 203

FIG. 2

FIG. 3

FIG. 4

FIG. 5

FIG. 6

FIG. 7

FIG. 8

900

Vehicle posture recognition apparatus

901       902       903

| First determining unit | Second determining unit | Recognition unit |

FIG. 9

Device for vehicle posture recognition 1000

1001       1002

| Processor | Memory |

Bus

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Vehicle detection and pose estimation by probabilistic representation. **XUE YAO et al.** IEEE INTERNATIONAL CONFERENCE ON IMAGE PROCESSING (ICIP). IEEE, 17 September 2017, 3355-3359